# FASCICULE DE BREVET EUROPEEN

(11) **EP 1 710 121 B1**
(45) Date de publication et mention de la délivrance du brevet: **12.10.2011**
(21) Numéro de dépôt: 06075852.1
(22) Date de dépôt: 04.04.2006
(51) Int. Cl.: B60P 1/28

(54) **Véhicule de voirie avec un dispostif de dépose d'outils**
Arbeitsfahrzeuge mit einer Vorrichtung zum An- und Abkuppeln eines Werkzeuges
Roadwork vehicle with means for for connecting or disconnecting a tool

(30) Priorité: 04.04.2005 FR 0503287
(43) Date de publication de la demande: 11.10.2006
(73) Titulaire: CFM Nilfisk-Advance, 20121 Milano (IT)
(72) Inventeur: Jungo, Nicolas, 68520 Burnhaupt Le Haut (FR)
(74) Mandataire: Giugni, Valter

(56) Documents cités:
- WO-A-93/17951
- US-A- 5 098 019
- US-A- 5 267 779
- US-A- 5 836 657
- US-B1- 6 224 161

## Description

La présente invention concerne un véhicule de voirie, plus particulièrement un véhicule destiné à l'entretien des voiries, comportant des moyens pour effectuer de manière sûre et rapide la dépose des outils utilisés pour effectuer les tâches de nettoyage ou de collecte des déchets.

Les véhicules de voirie traditionnels comportent pour l'essentiel une cabine disposée à l'avant d'un châssis qui est le plus souvent articulé. Les deux parties du châssis reçoivent sous le dessous les moyens de nettoyage, tels que par exemple des brosses ou des jets d'aspersion, et des moyens d'aspiration. La partie supérieure arrière du châssis peut recevoir différents éléments ou outils, comme par exemple des cuves de réception, des réservoirs contenant un fluide d'aspersion, des enrouleurs-dérouleurs, des potences de lavage, des épandeurs de sel de déneigement ...

Les agencements de type connus fournissent des résultats satisfaisants en terme d'efficacité des opérations de lavage ou de nettoyage, mais présentent néanmoins certains inconvénients.

En premier lieu, il n'est pas toujours possible d'utiliser plusieurs outils sur un même châssis de base. Les outils sont en général prédéfinis et fixés à demeure sur le châssis, ce qui impose de prévoir un parc de plusieurs véhicules, avec au moins une unité par type d'outils.

Par ailleurs, certaines opérations comme l'entretien des outils ou leur vidange sont de ce fait particulièrement lourdes et imposent une immobilisation prolongée du véhicule. Les opérations de dépose de l'outil, puis de maintenance, puis de remontage, sont longues et exigent la présence de plusieurs intervenants.

Diverses solutions ont été proposées pour remédier à ces inconvénients.

Le document DE 3641634 décrit une machine de nettoyage à outils interchangeables.

Les outils sont montés sur un cadre mobile avec des moyens de fixation rapide.

Cette modalité permet certes de réaliser la dépose aisée et rapide de certains types d'outils, comme des brosses, des balais ou un tambour. Mais elle est inadaptée au cas d'outils de grande dimension, dans la mesure où le cadre porte-outils ne repose pas sur le châssis du véhicule et où de ce fait, ce sont les deux extrémités d'accrochage du support qui supportent l'ensemble des contraintes.

Le document DE 4016154 décrit un dispositif composé d'un bloc autonome destiné à être fixé dans la partie inférieure avant du véhicule. Les outils sont reliés au bloc de base et la dépose et le remontage sont de ce fait assurés en déconnectant simplement le bloc, puis en le remontant.

Du fait du positionnement imposé de ce dispositif, son utilisation reste strictement limitée à des outils de sol, concrètement des brosses ou des balais, éventuellement des buses d'aspersion. Pour les mêmes raisons que celles évoquées ci-dessus, cette modalité n'est pas adaptée au cas d'outils lourds ou de grande taille.

Or, en raison même du type d'opérations effectuées par ces véhicules, à savoir la collecte de déchets ou de débris, ou l'épandage de fluides ou de granulats, il est nécessaire d'intervenir très fréquemment sur des éléments tels que des cuves, des réservoirs, des enrouleurs ....

D'autres solutions mettent en oeuvre des structures distinctes, accrochées à l'arrière du véhicule principal et sur lesquelles sont disposés les outils. Une solution de ce type est décrite dans le document US 4001908. L'inconvénient principal réside dans la faible maniabilité inhérente à l'utilisation d'une remorque.

L'art antérieur le plus proche est constitué par les documents US-A-5 836 657 et US-B1-6 334 161.

Le document US-A-5 836 657 décrit un dispositif de montage d'un conteneur sur un véhicule de transport, composé d'un support en deux parties articulées par l'arrière autour d'un axe. La partie inférieure du support est prévue pour être montée de manière amovible sur le châssis d'un véhicule et sa partie supérieure comporte des moyens de fixation pour un conteneur.

Le document US-A-6 224 161 décrit un véhicule pour l'entretien d'espaces verts comportant un châssis prévu pour recevoir de manière interchangeable un réservoir d'aspersion ou une benne, pouvant être monté ou déposé grâce à des pièces de fixation latérales articulées sur le cadre du châssis. Les pièces de fixation comportent chacune deux extensions latérales conçues pour entourer le cadre du châssis, l'ensemble étant traversé par une goupille faisant fonction à la fois de moyen de fixation et d'axe de rotation.

La présente invention se propose de remédier aux inconvénients mentionnés ci-dessus en réalisant un véhicule de voirie comportant un dispositif recevant les outils et conçu pour permettre une dépose rapide et en toute sécurité.

Dans ce but, le véhicule selon l'invention est caractérisé en ce qu'il comporte des moyens d'accouplement en partie arrière du véhicule, prévus pour assurer une dépose par inclinaison de l'outil.

La présente invention sera mieux comprise au travers de la description donnée ci-après à titre non limitatif d'un exemple de mise en oeuvre, et en référence aux dessins annexés dans lesquels :
- la figure 1 est une vue de côté de la partie arrière d'un véhicule de voirie équipé d'un dispositif de dépose d'outils selon la présente invention,
- la figure 2 est une vue de trois-quarts arrière en élévation du véhicule équipé d'un dispositif de dépose d'outils représenté à la figure 1,
- la figure 3 est une vue de côté illustrant la dépose d'un outil, en l'occurrence une cuve,
- la figure 4 montre l'outil après dépose et
- la figure 5 est une vue de détail montrant les moyens de verrouillage du dispositif de dépose d'outils équipant le véhicule selon l'invention.

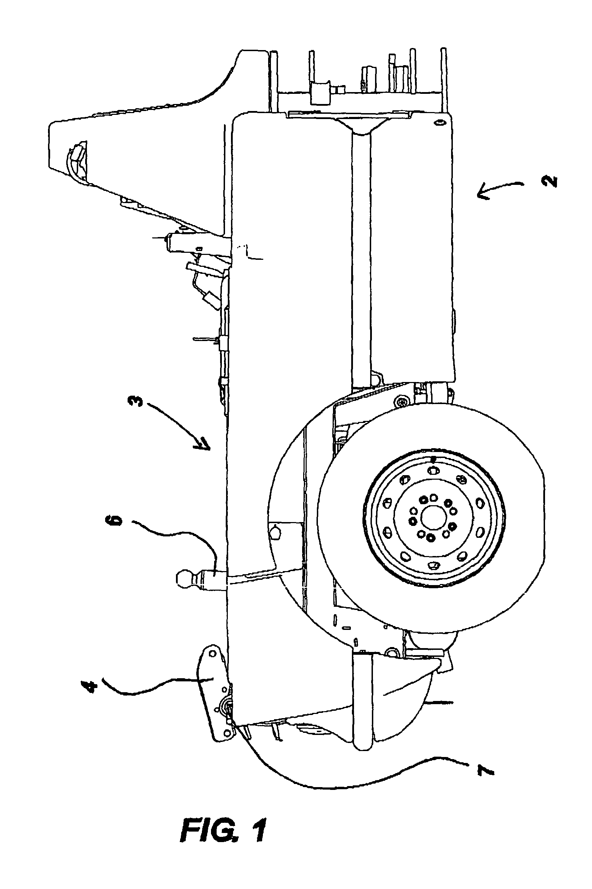

En référence aux dessins annexés et plus particulièrement à la figure 1, le véhicule de voirie selon la présente invention est composé de manière classique d'une cabine (non représentée) qui est montée sur la partie avant d'un châssis (2) qui pourra être articulé ou non.

La partie arrière (3) du châssis (2) est destinée à recevoir un ou plusieurs outils nécessaires à l'accomplissement des tâches de voirie.

Dans l'exemple illustré par les dessins et décrit dans la suite de la description, l'outil qui est désigné sous le chiffre de référence (1), est constitué par une cuve de réception. Il doit cependant être bien compris que cette cuve peut être remplacée par n'importe quel autre type d'outils, comme dit plus haut, sans que cela ne modifie le mode de mise en oeuvre de l'invention.

Comme représenté à la figure 1, la partie arrière (3) du châssis (2) du véhicule de voirie comporte des moyens d'accouplement (4) prévus pour recevoir les outils et les solidariser au châssis du véhicule. Les moyens d'accouplement (4) peuvent pivoter vers l'arrière dans le plan vertical, autour d'un axe de basculement (7).

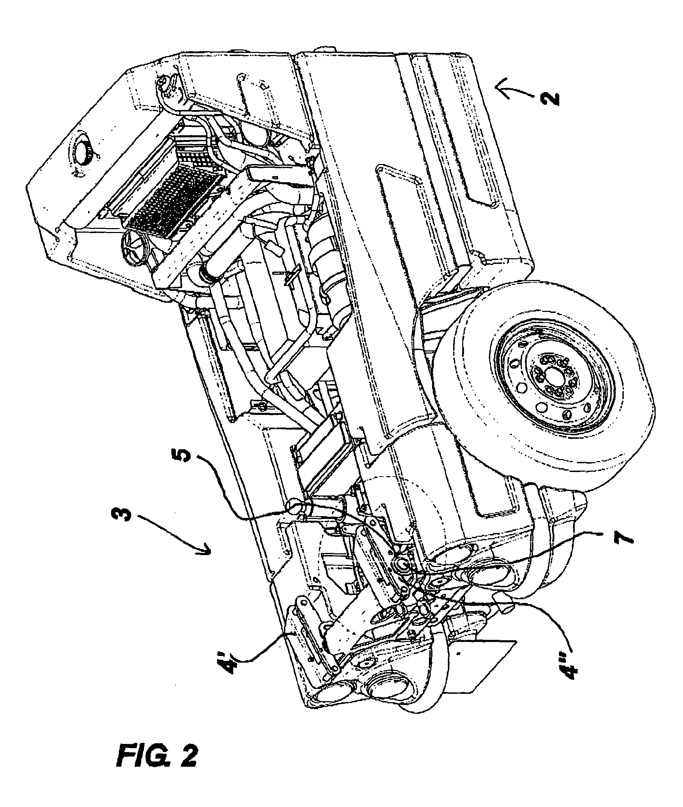

Comme montré à la figure 2, les moyens d'accouplement (4) sont constitués de deux éléments distincts et identiques (4' et 4"), en forme de U. Les éléments (4' et 4"), qui sont indépendants l'un de l'autre, sont disposés sur les côtés, à l'extrémité arrière du châssis (2) du véhicule.

Selon une forme avantageuse de réalisation, les éléments (4' et 4") présentent une forme en U évasée vers le haut.

Les éléments (4' et 4") sont préformés de manière à s'adapter à la structure sensiblement en U de la partie arrière du châssis du véhicule-

Ces deux éléments pourront avantageusement être sensiblement symétriques.

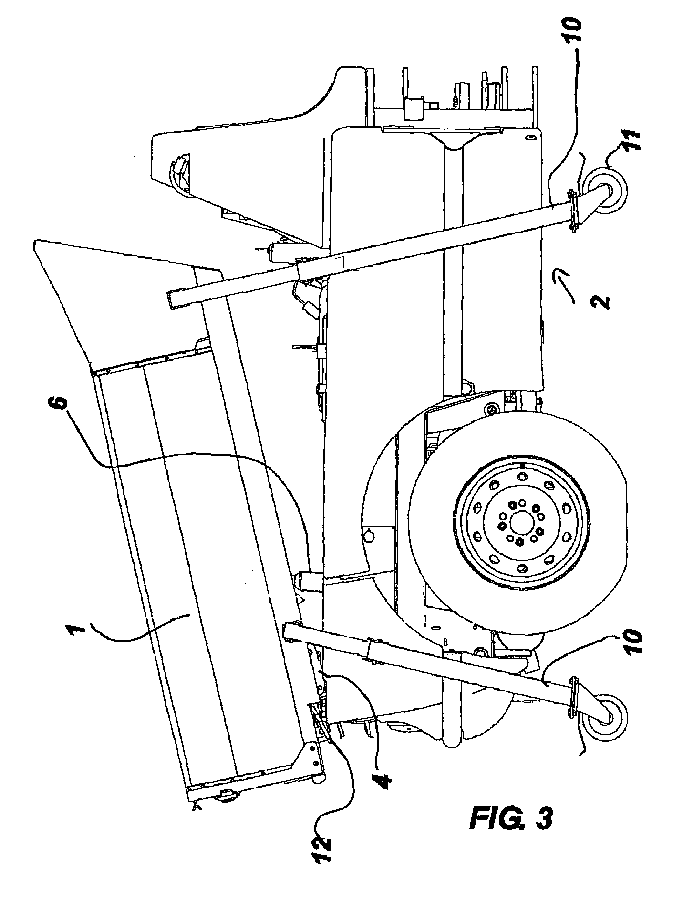

Comme montré à la figure 3, les moyens d'accouplement (4) peuvent être basculés vers l'arrière, Ceci permet de déposer l'outil (1) en position inclinée, et donc de faciliter le contrôle de l'accostage par le conducteur.

Selon une forme de réalisation préférentielle, le véhicule selon l'invention comportera une suspension à hauteur variable. Cette suspension est formée de vérins à simple effet (non représentés) prévus pour venir appuyer sur les ressorts à lames (non représentés) du châssis (2).

Comme montré aux figures 1 à 3, le mouvement de basculement de l'outil (1) autour des moyens d'accouplement (4) est réalisé au moyen d'un vérin (6) disposé sensiblement en position centrale dans la partie arrière du châssis.

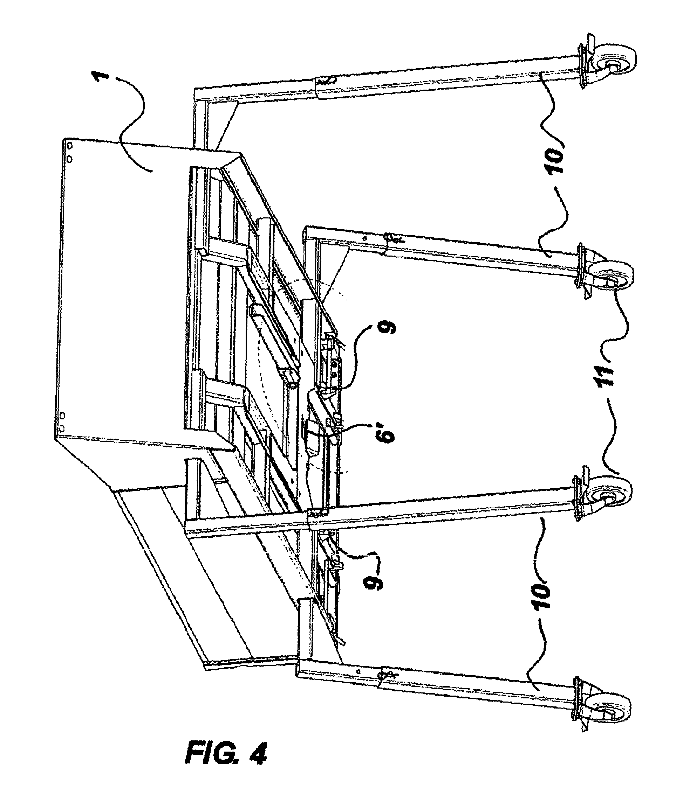

Comme illustré à la figure 4, le dessous de l'outil (1) est configuré de manière à coopérer avec le dispositif de dépose.

Un réceptacle (6') est ménagé à l'extérieur sur la surface de fond de l'outil, et est destiné à servir de logement pour la tête du vérin (6), de telle sorte que le dispositif soit parfaitement stabilisé lorsqu'on opère le mouvement de bascule vers l'arrière, en vue de déposer l'outil (1).

On prévoit également une contre-pièce (8) disposée en arrière du réceptacle (6'), dans l'axe longitudinal de l'outil (1), en correspondance des éléments (4' et 4") du dispositif de dépose constituant les moyens d'accouplement (4).

La contre-pièce (8) fait fonction de guidage pour permettre de centrer l'outil et de définir sa position par rapport au véhicule.

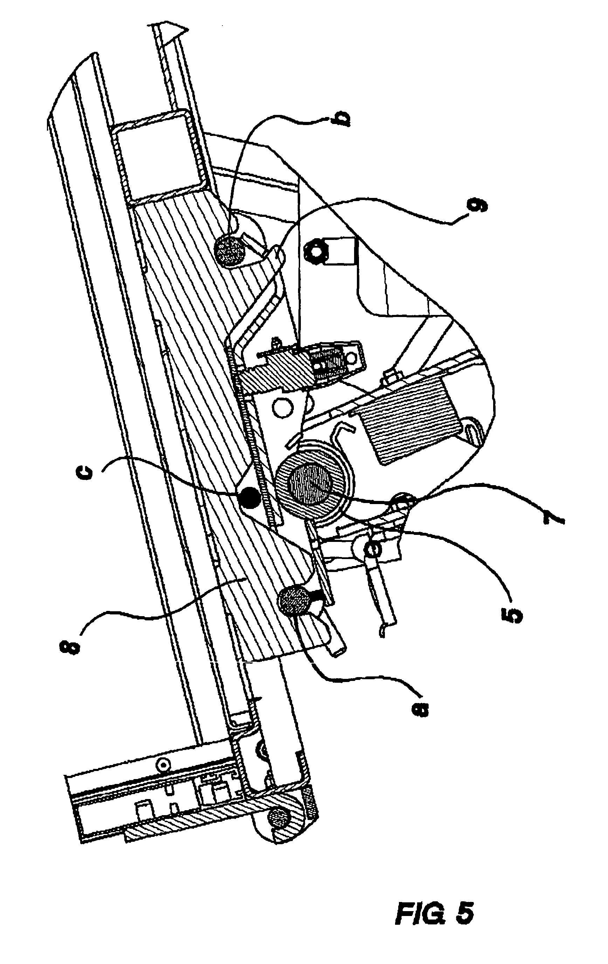

La figure 5 montre une vue de détail des éléments qui permettent de réaliser le verrouillage et le déverrouillage du dispositif lors de la dépose ou de la pose d'un outil.

Le mouvement de bascule des moyens d'accouplement (4) est contrôlé par un ressort (5). Chacun des éléments (4' et 4") comporte, outre l'axe de basculement (7), deux autres axes transversaux (a et b) de blocage et un troisième axe (c) de verrouillage prévu pour recevoir des moyens de verrouillage.

Comme déjà dit plus haut, l'axe (7), situé dans la partie inférieure des éléments (4' et 4"), sert à assurer le mouvement de basculement du dispositif lors de l'opération de dépose.

L'axe (b) situé à l'extrémité avant des éléments (4' et 4") sert à assurer le maintien en position lors de l'accostage et l'axe (a) situé à l'extrémité arrière des éléments (4' et 4") sert à assurer le maintien en position une fois l'outil monté, en coopérant avec une pièce en forme de crochet (9) prolongeant l'extrémité inférieure avant de la contre-pièce (8), et prévue pour engager l'axe (b).

La réalisation d'opération de dépose ou de pose d'outils au moyen d'un véhicule selon l'invention est particulièrement simple.

La figure 3 illustre le positionnement des différents éléments au début de la phase de dépose ou de pose.

Lorsque le véhicule est placé dans la position correspondant à l'emplacement où l'outil à déposer devra être stocké, on dispose de part et d'autre de l'outil (1), à chacun de ses quatre coins, des pieds de support (10), dont l'extrémité supérieure sera fixée par tous moyens appropriés à la base dudit outil.

De manière avantageuse, les pieds de supports (10) seront montés sur des roulettes (11), ce qui facilitera les déplacements ultérieurs de l'outil, une fois celui-ci déposé.

Les pieds de support (10) peuvent être réglables en longueur, pour s'adapter à des véhicules de différentes dimensions.

Lors de l'opération de dépose, le vérin (6) appuie sur l'outil (1) et l'ensemble se retrouve dans la position voulue par simple effet de gravitée.
La suspension du véhicule est alors actionnée pour soulever l'outil (1) des pieds (10), comme montré à la figure 3.

Une fois l'outil (1) déposé, on le désolidarise du dispositif monté sur le châssis du véhicule en déverrouillant les moyens d'accouplement (4). Le véhicule ainsi libéré peut alors repartir par l'avant.

En principe, et comme illustré à la figure 4, l'outil (1) sera stocké en l'état, c'est-à-dire sur les pieds de support (10) dans l'attente d'une nouvelle utilisation sur le même véhicule ou sur tout autre véhicule équipé d'un dispositif selon l'invention. Grâce aux roulettes (11), il sera éventuellement possible de procéder à des déplacements de faible amplitude, par exemple pour ajuster la position de l'ensemble par rapport à un véhicule avant une nouvelle opération de pose.

Pour réaliser l'opération inverse, c'est-à-dire la pose d'un outil sur un véhicule, il suffira de positionner ce dernier selon l'axe de l'outil.

Le véhicule reculera de manière à se placer sous l'outil (1) en passant entre les pieds de support (10). Une fois le véhicule correctement positionné à l'arrêt, il suffira de relever la suspension pour réaliser l'accouplement et verrouiller les moyens d'accouplement (4).

La figure 5 illustre plus particulièrement les modalités de verrouillage de l'outil. Lors de l'accostage, les moyens d'accouplement (4) viennent en butée par l'axe (b) contre le crochet (9) à la base de la contre-pièce (8) de l'outil (1). On actionne alors la suspension jusqu'à obtenir l'alignement des axes (a et b), l'axe (a) venant alors naturellement se placer en position de blocage.

Les pieds de support (10) seront ensuite retirés afin de permettre au véhicule portant l'outil (1) de repartir.

De manière avantageuse, comme montré à la figure 3, on pourra introduire au travers de l'axe (c) des moyens d'accouplement (4) des tiges de verrouillage (12) pour sécuriser la fixation de l'outil sur le dispositif.

Selon une variante de réalisation, les tiges de verrouillage (12) comporteront un embout rétrécit.

La description qui précède permet d'apprécier les avantages du dispositif selon l'invention. La dépose et la pose de tout type d'outil sont grandement facilitées, tout comme le stockage des différents outils. Comme c'est le véhicule qui va vers l'outil, et non pas l'inverse, les manipulations et déplacements lourds sont évités. Enfin, il n'est plus nécessaire de disposer d'un parc de véhicules différenciés en fonction des tâches à accomplir ou des outils à utiliser.

## Revendications

1. Véhicule de voirie du type composé d'une cabine montée sur la partie avant d'un châssis (2) et d'au moins un outil (1) monté sur la partie arrière (3) dudit châssis, ladite partie arrière (3) comportant des moyens d'accouplement (4) basculables vers l'arrière autour d'un axe de basculement (7) pour solidariser les outils au châssis, lesdits moyens d'accouplement étant constitués de deux éléments distincts et identiques (4' et 4"), en forme de U et disposés sur les côtés, à l'extrémité arrière du châssis (2) du véhicule, le basculement desdits moyens d'accouplement (4) étant réalisé au moyen d'un vérin (6) disposé sensiblement en position centrale dans la partie arrière du châssis (2), un réceptacle (6') étant ménagé à l'extérieur sur la surface de fond de l'outil (1) pour recevoir la tête du vérin (6), **caractérisé en ce que** chacun des éléments (4' et 4") comporte deux axes transversaux (a et b) situés dans la partie inférieure desdits éléments (4' et 4"), pour assurer le blocage du dispositif une fois la suspension du véhicule remontée.

2. Véhicule selon la revendication 1, **caractérisé en ce que** les axes transversaux (a et b) sont sensiblement alignés.

3. Véhicule selon la revendication 1, **caractérisé en ce que** le basculement des moyens d'accouplement (4) est contrôlé par un ressort (5).

4. Véhicule selon la revendication 1, **caractérisé en ce qu'**une contre-pièce (8) est disposée en arrière du réceptacle (6'), dans l'axe longitudinal de l'outil (1), en correspondance des éléments (4' et 4").

5. Véhicule selon la revendication 1, **caractérisé en ce que** les éléments (4' et 4"), sont indépendants l'un de l'autre.

6. Véhicule selon la revendication 1, **caractérisé en ce que** l'axe (a) coopère avec une pièce en forme de crochet (9) prolongeant l'extrémité inférieure avant de la contre-pièce (8) et prévue pour engager l'axe (b), pour assurer le maintien en position de l'outil (1) après montage

7. Véhicule selon la revendication 1, **caractérisé en ce que** chacun des éléments (4' et 4") comporte un axe (c) de verrouillage prévu pour recevoir des moyens de verrouillage constitués de tiges de verrouillage (12) introduites dans l'axe (c).

## Claims

1. Road vehicle comprising a cabin assembled on the front part of a frame (2) and of at least a device (1) assembled on the rear part (3) of said frame, said front part (3) comprising coupling means (4) able to be dumped rearwards around a dump axle (7) to block the devices to the frame, said coupling means being formed by two elements separated and identical (4' and 4"), having a U-shape and positioned on sides, at the rear end of the frame (2) of the vehicle, the upsetting of said coupling means (4) being carried out by a jack (6) substantially positioned centrally to the rear part of the frame (2), a seat (6') being performed outwardly on the bottom surface of the device (1) to receive the head of the jack (6), **characterized in that** each of the elements (4' and 4") comprises two transverse axles (a and b), in order to block the device when the vehicle suspension has been re-assembled.

2. Road vehicle according to claim 1, **characterized in that** the transverse axles (a and b) are substantially aligned.

3. Road vehicle according to claim 1, **characterized in that** the upsetting of the coupling means (4) is controlled by a spring (5).

4. Road vehicle according to claim 1, **characterized in that** a counter-piece (8) is positioned behind the seat (6'), along the longitudinal axle of the device (1), in correspondence to the elements (4' and 4").

5. Road vehicle according to claim 1, **characterized in that** the elements (4' and 4") are independent each other.

6. Road vehicle according to claim 1, **characterized in that** the axle (a) cooperates with a piece (9) hooked-shape which extends the lower end before the counter-piece (8) and is able to engage the axle (b), in order to ensure keeping into position the device (1) after its assembly.

7. Road vehicle according to claim 1, **characterized in that** each of the elements (4' and 4") comprises a blocking axle (c) provided to receive blocking means formed by blocking rods (12) which are introduced into the axle (c).

## Patentansprüche

1. Straßenmeisterei-Fahrzeug des Typs mit einer auf den vorderen Teil eines Rahmens (2) montierten Kabine und wenigstens einem auf den hinteren Teil (3) des genannten Rahmens montierten Gerät (1), wobei der genannte hintere Teil (3) nach hinten um eine Achse (7) kippbare Kupplungseinrichtungen (4) zur Verbindung des Geräts mit dem Rahmen umfasst, und die genannten Kupplungseinrichtungen gebildet werden durch zwei U-förmige, auf dem hinteren Ende des Fahrzeugrahmens (2) seitlich angeordnete verschiedene und identische Elemente (4' und 4"), wobei das Kippen der genannten Kupplungseinrichtungen (4) mit Hilfe eines Zylinders (6) erfolgt, der in dem hinteren Teil des Rahmens (2) angeordnet ist, im Wesentlichen in zentraler Position, wobei auf der Außenseite des Geräts (1) in der Bodenfläche eine Aufnahme (6') vorgesehen ist, um den Kopf des Zylinders (6) aufzunehmen,
**dadurch gekennzeichnet, dass** jedes der Elemente (4' und 4") zwei transversale Achsen (a und b) umfasst, die sich in dem unteren Teil der genannten Elemente (4' und 4") befinden, um die Blockierung der Vorrichtung sicherzustellen, wenn die Aufhängung des Fahrzeugs wieder hochgefahren ist.

2. Fahrzeug nach Anspruch 1, **dadurch gekennzeichnet, dass** die transversalen Achsen (a und b) im Wesentlichen ausgerichtet sind.

3. Fahrzeug nach Anspruch 1, **dadurch gekennzeichnet, dass** das Kippen der Kupplungseinrichtungen (4) durch eine Feder (5) kontrolliert wird.

4. Fahrzeug nach Anspruch 1, **dadurch gekennzeichnet, dass** hinter der Aufnahme (6') in der longitudinalen Achse des Geräts (1) ein Gegenstück (8) angeordnet ist, in Übereinstimmung mit den Elementen (4' und 4").

5. Fahrzeug nach Anspruch 1, **dadurch gekennzeichnet, dass** die Elemente (4' und 4") voneinander unabhängig sind.

6. Fahrzeug nach Anspruch 1, **dadurch gekennzeichnet, dass** die Achse (a), um das Gerät (1) nach der Montage in Position zu halten, mit einem hakenförmigen Teil (9) kooperiert, welches das vordere untere Ende des Gegenstücks (8) verlängert und vorgesehen ist, die Achse (b) einzurücken.

7. Fahrzeug nach Anspruch 1, **dadurch gekennzeichnet, dass** jedes der Elemente (4' und 4") eine Verriegelungsachse (c) umfasst, vorgesehen zu Aufnahme von Verriegelungseinrichtungen, gebildet durch in die Achse (c) eingeführte bzw. gesteckte Verriegelungsstangen (12).
